# FASCICULE DE BREVET EUROPEEN

(11) **EP 1 880 930 B1**
(45) Date de publication et mention de la délivrance du brevet: **30.12.2009**
(21) Numéro de dépôt: 07356040.1
(22) Date de dépôt: 29.03.2007
(51) Int. Cl.: B62D 33/04

(54) **Caisse isotherme pour un véhicule**
Isothermbehälter für ein Fahrzeug
Isotherm container for a vehicle

(30) Priorité: 20.07.2006 FR 0606610
(43) Date de publication de la demande: 23.01.2008
(73) Titulaire: Lamberet Constructions Isothermes, 01380 Saint Cyr sur Menthon (FR)
(72) Inventeur: Clavier, François, 71870 Hurigny (FR)
(74) Mandataire: Delorme, Nicolas

(56) Documents cités:
- EP-A1- 1 288 112

## Description

La présente invention concerne une caisse isotherme pour un véhicule motorisé ou pour un véhicule non motorisé de type remorque ou semi remorque.

De nombreux produits, notamment alimentaires, doivent être maintenus à température constante fraîche (+2°C à +6°C) ou froide (-18°C). Pour assurer la logistique de ces produits, on a recours à des véhicules dits frigorifiques. Ces véhicules permettent d'assurer la continuité de la chaîne du froid pour des produits qui doivent être transportés entre un entrepôt de départ qui est maintenu à une température dirigée et un entrepôt d'arrivée ou un lieu de vente qui est également maintenu sous température dirigée.

Traditionnellement, un véhicule frigorifique comprend une caisse isotherme composée de panneaux isolants pouvant utiliser la technique du sandwich polyuréthane. Ces caisses isothermes peuvent prendre place sur un châssis porteur d'un véhicule ou sur un châssis ou pseudo châssis de semi remorque.

La logistique des produits froids impose des contraintes spécifiques pour assurer la continuité de la chaîne du froid. En particulier, il importe que, lors de l'accostage sur un quai d'un entrepôt, la face arrière du véhicule vienne se plaquer contre un sas de façon à créer une jonction étanche entre la caisse du véhicule dont les portes sont ouvertes et l'entrepôt qui se trouve sous une température dirigée.

Cela se traduit concrètement par des accostages nombreux et souvent brutaux entre la partie arrière de la caisse et le quai.

La répétition et la brutalité des accostages peuvent endommager la caisse avec comme corollairement des frais de remise en état de la caisse et une immobilisation de celle-ci durant les opérations de réparation.

Une autre spécificité du transport isotherme tient au fait que certains produits peuvent être suspendus à des rails qui sont eux-mêmes fixés en hauteur de la caisse. Les carcasses d'animaux sont typiquement transportées de cette manière. Cela crée d'importantes sollicitations mécaniques, notamment en torsion autour de l'axe longitudinal de la caisse ; ces sollicitations tendent à déformer la caisse sous forme de parallélogramme autour de son axe longitudinal ; en particulier lorsque le véhicule s'inscrit dans une courbe les charges suspendues dans la caisse subissent une force centrifuge qui crée un moment autour de l'axe longitudinal de la caisse. Les parois latérales de la caisse peuvent alors s'incliner par rapport au plancher, donnant à la caisse une forme de parallélogramme.

Une caisse isotherme parallélépipédique telle que décrit par le préambule de la revendication 1 est connue du document EP 1 288 112 A.

La présente invention vise à remédier à ces inconvénients.

Un but de l'invention est de proposer une caisse isotherme pouvant être embarquée sur un véhicule capable de supporter des accostages répétés avec un quai de manutention.

Un autre but de l'invention est de proposer une caisse isotherme capable de supporter des accostages répétés tout en améliorant la rigidité en torsion de la caisse.

La présente invention concerne une caisse isotherme parallélépipédique telle que décrite par la revendication 1.

Un aspect essentiel de l'invention est la prise en compte de la problématique de l'accostage et des impacts qui en résultent sur la caisse isotherme d'un véhicule frigorifique. L'invention se caractérise par la présence de moyens de liaison qui assurent une double fonction. D'une part, il s'agit de la création d'une cavité en bout de chaque paroi latérale de la caisse ; cette cavité reçoit un organe d'absorption de chocs qui assure la protection d'une partie de caisse isotherme qui est traditionnellement exposée aux chocs. D'autre part, il s'agit de déporter, hors de la zone d'accostage, la porte lorsqu'elle est en position ouverte.

Selon une forme de réalisation, chacun des moyens de liaison d'une porte sur la caisse comprend :
un profilé dormant fixé sur le chant d'une des parois latérales, doté d'au moins un alésage situé sensiblement au niveau de l'intersection de la face extérieure et du chant de ladite paroi latérale, le profilé dormant présentant un moins une découpe dans laquelle débouche l'alésage,
un profilé ouvrant comprenant une aile dont une extrémité transversale est fixée sur le chant d'une porte et dont la seconde extrémité transversale présente un ourlet dans lequel est ménagé un alésage, le profilé ouvrant présentant au moins une découpe dans laquelle débouche l'alésage,
au moins une charnière double noeud à deux alésages parallèles, insérée dans le découpe du profilé dormant et dans la découpe du profilé ouvrant, accueillant des tiges de liaison parallèles respectivement engagées dans l'alésage du profilé dormant et dans l'alésage du profilé ouvrant,
les moyens de liaison (i) créant, en position fermée des portes, une cavité verticale recevant un organe d'absorption de choc délimitée par le chant de la paroi latérale, au moins une partie du chant de la porte et l'aile du profilé ouvrant et (ii) déportant, en position ouverte de la caisse, la porte en direction de la paroi frontale d'une distance égale à la dimension transversale de l'aile.

Un bénéfice supplémentaire de l'invention tient à l'aspect particulièrement lisse de la face arrière de la caisse, puisque c'est le profilé ouvrant qui constitue la principale partie visible de la liaison entre la porte et les parois latérales.

Selon un autre aspect de l'invention, en position fermée, chaque porte s'engage au moins partiellement dans la caisse et est équipée de moyens de rigidification s'opposant à la déformation à la torsion de la caisse et/ou mise en parallélogramme de cette dernière par rapport à son axe longitudinal.

Cette autre disposition de l'invention permet d'améliorer le comportement en torsion de la caisse. Du fait de sa longueur importante (jusqu'à près de 14 mètres), la caisse est sollicitée en torsion de manière importante. En réalisant un emboîtement de chaque porte dans la caisse et en renforçant chacune des portes, ces dernières assurent une reprise des efforts qui s'exercent sur les parois de la caisse et contribuent ainsi à en augmenter la rigidité. Cette disposition dont l'effet de rigidification s'ajoute à celui classique des tringleries de fermeture de chaque porte contribue à combattre très efficacement la déformation en parallélogramme de la caisse.

De façon concrète, chaque porte, au niveau d'au moins un de ses angles, peut présenter un insert de rigidification qui s'oppose à la déformation à la torsion de la caisse et/ou mise en parallélogramme de cette dernière par rapport à son axe longitudinal.

Cette disposition s'avère tout à fait avantageuse dans la mesure où l'insert de rigidification a un positionnement circonscrit aux zones de la porte qui ont un effet maximal sur le transfert d'efforts ; l'insert de rigidification interfère donc peu avec l'isolation générale de la porte. Grâce aux inserts de rigidification, la caisse est sensiblement moins sujette à d'éventuelles déformations en parallélogramme.

Selon une forme de réalisation, chaque porte présente au moins un insert de rigidification positionné dans l'angle de celle-ci contigu à l'angle de l'ouverture arrière faisant l'intersection entre le plancher et l'une des parois latérales. En d'autres termes chaque porte est équipée d'un insert de rigidification dans la partie inférieure.

Pour amplifier l'effet de rigidification, il peut être prévu que chaque porte possède deux inserts de rigidification positionnés dans ses deux angles latéraux. Cette disposition qui prévoit que chaque porte soit équipée de deux inserts de rigidification dans ses angles latéraux s'avère extrêmement pertinente car elle permet de faire travailler les inserts de rigidification deux à deux selon les deux diagonales de la face arrière. Si l'on considère les deux diagonales fictives qui partent des angles de l'ouverture arrière de la caisse, on peut constater que grâce aux inserts de rigidification qui viennent s'emboîter dans chacun des angles de l'ouverture arrière, ces deux diagonales demeurent stables même lorsque la caisse est sollicitée en torsion. En d'autres termes, la mise en parallélogramme de la caisse qui se traduit par un allongement de l'une des diagonales et le raccourcissement de l'autre diagonale est très substantiellement limitée par la présence des inserts de rigidification. Un autre effet notable de la présence des inserts de rigidification, en particulier, les inserts situés aux niveau des angles inférieures latéraux est un renfort contre les chocs qui peuvent s'exercer sur la partie inférieure de l'une des portes.

Il peut être envisagé que chaque porte présente un cadre de renfort ceinturant un panneau isolant sur lequel vient s'appuyer l'insert de rigidification.

Selon une forme de réalisation, l'insert de rigidification peut comprendre deux plaques respectivement collées sur les faces internes des parois internes formant une porte arrière.

Pour une caisse isotherme de transport de dimensions classiques, chacune des portes peut être reliée à la caisse par deux à quatre charnières à double noeud.

Selon une disposition de construction, chaque porte embarque un joint périphérique à plusieurs lèvres qui viennent s'écraser contre les parois intérieures de la caisse lorsque ladite porte est en position fermée.

De plus le profilé ouvrant présente une nervure sur laquelle est chaussé un joint qui vient en appui contre l'arête située à l'intersection de la face intérieure et du chant d'une paroi latérale.

Il peut également être envisagé qu'un bourrelet amortisseur soit disposé sur le chant du plancher.

Pour sa bonne compréhension, l'invention est décrite en référence au dessin ci annexé représentant, à titre d'exemple non limitatif, une forme de réalisation d'une caisse isotherme selon celle-ci.
Figure 1 est une vue en perspective de la partie arrière d'une caisse selon l'invention montée sur un véhicule,

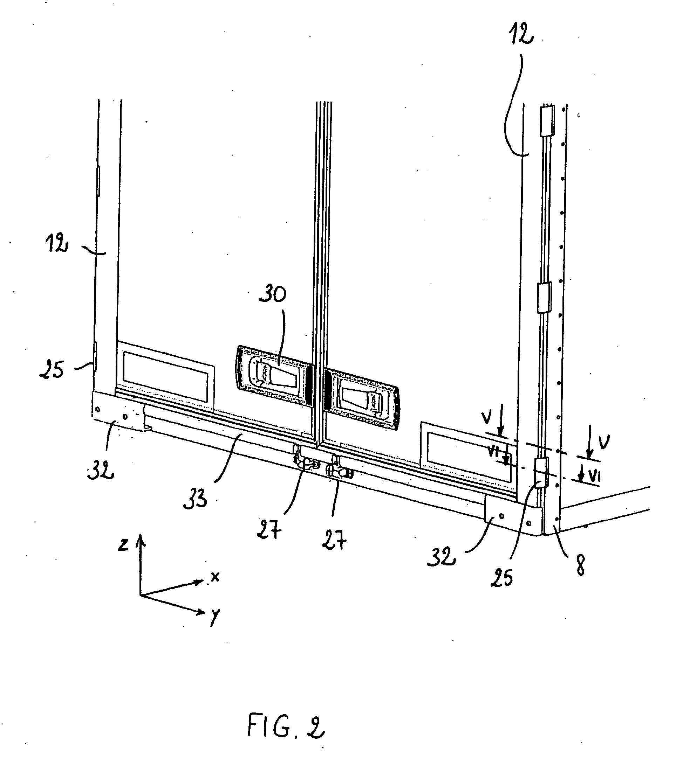

Figure 2 montre la face arrière de la caisse selon l'invention, les portes fermées,
Figure 3 est une vue analogue à celle de la figure 2 avec les portes ouvertes,

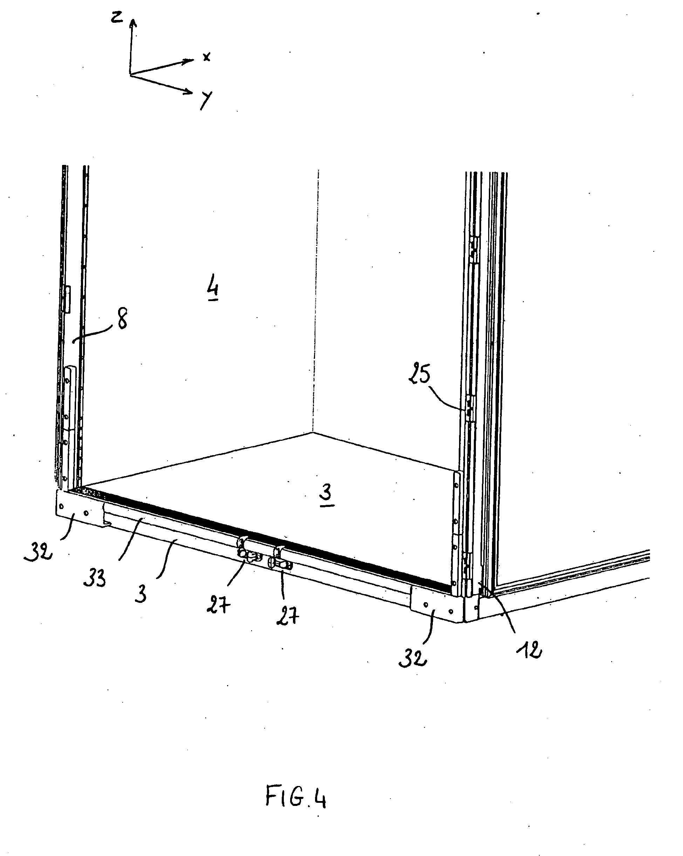

Figure 4 montre en perspective la caisse selon l'invention avec les portes ouvertes,
Figure 5 est une coupe transversale selon V-V de figure 2 de l'assemblage d'une porte et de la caisse isotherme,
Figure 6 est une vue en coupe selon VI-VI de figure 2 de l'assemblage d'une porte sur une caisse isotherme.

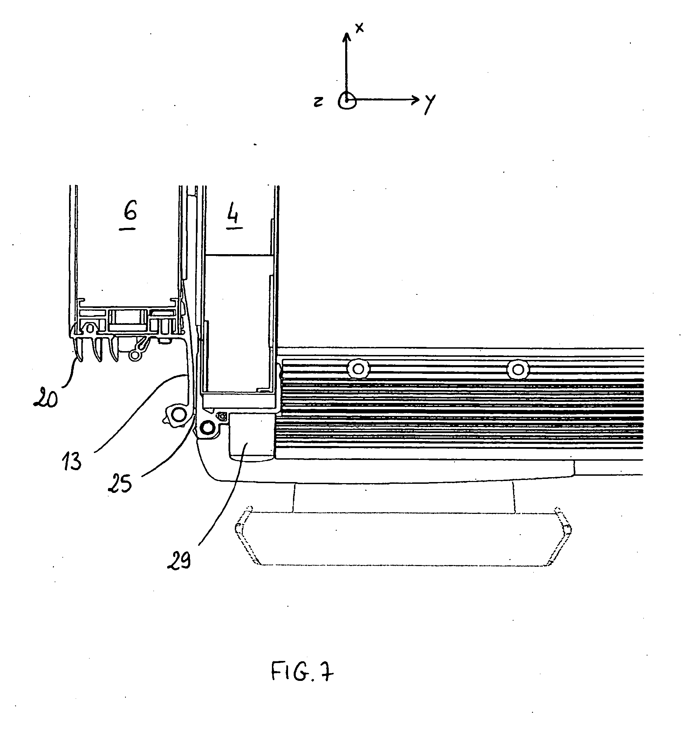

Figure 7 est une coupe analogue à celle de la figure 5 montrant la caisse avec ses portes ouvertes,
Figure 8 est une vue en coupe, faite au niveau d'un insert de rigidification, de la caisse et d'une de ses portes.

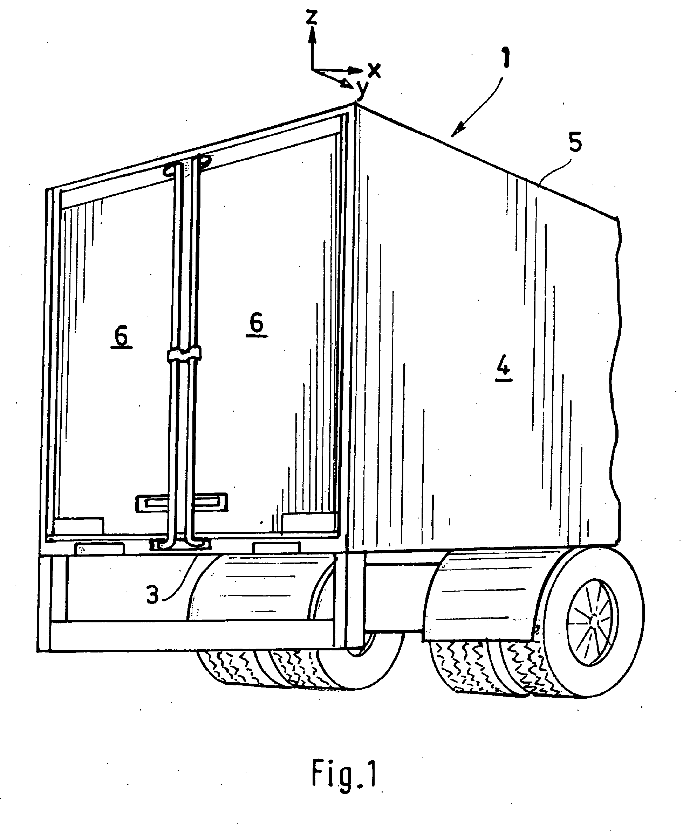

Préliminairement, il est précisé que la caisse isotherme 1 dans sa forme de réalisation illustrée sur le dessin est décrite par rapport à un référentiel xyz (voir Figure 1) présentant une direction longitudinale x par rapport à laquelle sont notamment utilisés les termes « longueur », « avant », « arrière », une direction transversale y par rapport à laquelle sont notamment utilisés les termes « largeur », « latérale » et une direction verticale z, par rapport à laquelle sont notamment utilisés les termes « supérieur », « inférieur », « hauteur ».

Comme on peut le voir sur la figure 1, la caisse qui porte la référence générale 1 comprend une paroi frontale (qui n'apparaît pas sur la figure 1) un plancher 3, un plafond 5, et deux parois latérales 4 parallèles. Les deux parois latérales 4 encadrent une ouverture arrière qui permet le chargement et le déchargement ; cette ouverture est fermée par deux portes 6 qui sont respectivement articulées sur chacune des parois latérales 4.

Dans la mesure où la caisse 1 est destinée à assurer le transport de produits sous température dirigée, les plancher 3, plafond 5, parois latérales 4 et paroi frontale sont réalisés dans des panneaux isolants qui peuvent être en sandwich de polyuréthane. La caisse 1 embarque généralement un groupe frigorifique qui peut être suspendu sur sa paroi frontale.

La caisse 1 est posée et fixée sur un châssis de véhicule; dans l'exemple représenté il s'agit d'un châssis de semi remorque à deux essieux destiné à être tracté par un véhicule tracteur, mais il peut être précisé que la caisse 1 pourrait très bien être posée sur un châssis d'un camion.

Pour le chargement et le déchargement des produits transportés dans la caisse 1 d'un véhicule frigorifique, celui-ci recule contre un quai qui se trouve approximativement au niveau du plancher 3. A chaque accostage, la partie arrière de la caisse 1 vient donc en butée d'une construction maçonnée ; ces accostages répétés sur des quais de hauteurs et largeurs diverses, pourvus ou non de protection peuvent endommager la caisse du fait de la répétition et de la rudesse des accostages.

Dans cette problématique, l'un des points tout à fait spécifique de la caisse selon l'invention tient dans la réalisation de l'articulation sur chacune des deux parois latérales 4 des deux portes 6 qui ferment l'ouverture de la caisse 1.

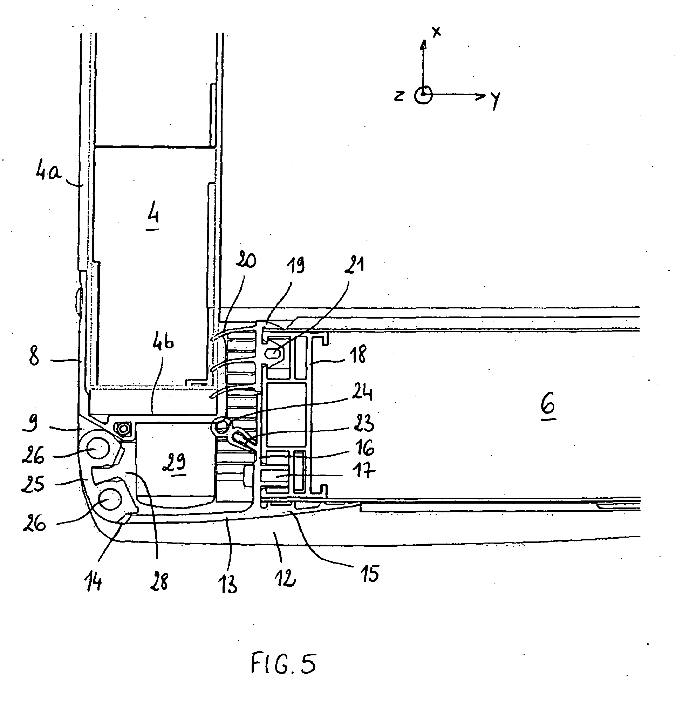

Pour cela, on pourra se reporter plus spécifiquement à la figure 5 qui montre, en coupe, une forme d'exécution de cette liaison fonctionnelle.

La figure 5 représente une coupe transversale partielle d'une paroi latérale 4 et d'une porte 6 fixée sur cette paroi 4 par des moyens de liaison spécifiques à l'invention qui vont maintenant être décrits.

On peut tout d'abord voir que la paroi latérale 4, tout comme la porte 6, présentent une épaisseur conséquente, ce qui leur permet de réaliser une bonne isolation de la caisse.

Sur le chant de la paroi latérale 4, est chaussé un profilé dormant 8 qui, en section transversale, présente sensiblement la forme d'un U ; une nervure 9 creuse est accolée à la partie en U du profilé dormant 8 et court sur toute la hauteur de ce dernier. Comme on peut le voir sur la figure 5, la nervure 9 est percée d'un alésage qui s'étend sur toute sa hauteur.

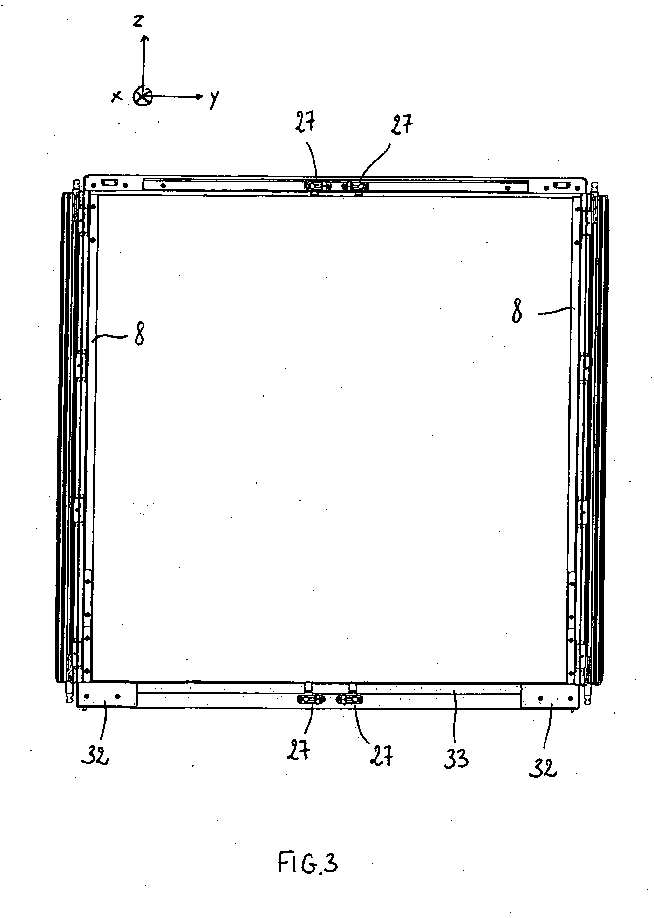

En se reportant par exemple à la figure 3, on peut voir que le profilé dormant 8 présente quatre découpes ménagées dans la nervure 9 creuse dont la fonction apparaîtra plus loin.

Il est à préciser que la nervure 9 creuse se situe sensiblement à l'intersection de la face extérieure 4a de la paroi latérale 4 et son chant 4b.

En ce qui concerne la porte 6, on peut voir que celle-ci reçoit un profilé ouvrant 12 qui se présente sensiblement, en section transversale, sous la forme d'une aile 13 dont une extrémité présente un ourlet 14 dans lequel est pratiqué un alésage, et dont l'autre extrémité présente deux semelles de fixation 15 et 16 perpendiculaires l'une à l'autre.

La porte 6 est dotée d'un cadre périphérique 18 qui peut être réalisé en matière rigide isolante (par exemple PVC ou PE) et qui ceinture le panneau isolant constituant la porte 6 ; c'est sur ce cadre 18 que se fixe le profilé ouvrant 12. On peut voir sur la figure 5 l'une des vis 17 de fixation qui peut assurer la fixation du profilé ouvrant 12 sur la porte 6.

De façon classique, la porte 6 est dotée de plusieurs joints qui viennent réaliser l'étanchéité avec la face intérieure de la paroi latérale 4. Ces joints d'étanchéité peuvent être, par exemple comme on peut le voir sur la figure 5, un joint d'étanchéité 19 à trois lèvres 20 qui est engagé par un pion 21 en contre dépouille dans le cadre périphérique 18 de la porte 6. Il peut également être prévu de doter le profilé ouvrant 12 d'une nervure 23 sur laquelle vient se chausser un joint d'étanchéité 24 qui viendra en contact de l'arête du profilé dormant 8 lorsque la porte 6 est fermée.

De façon symétrique à ce qui est prévu pour le profilé dormant 8, le profilé ouvrant 12 possède quatre découpes pratiquées dans sa partie en ourlet 14.

Pour assurer la liaison proprement dite entre la porte 6, et, en particulier, le profilé ouvrant 12 et la paroi latérale 4 et, en particulier, le profilé dormant 8, il est prévu, pour la caisse 1 représentée, quatre charnières 25 double noeuds. Chacune de ces charnières 25 double noeuds est constituée d'une pièce métallique qui possède deux alésages parallèles dans lesquels sont engagées des tiges de liaison 26.

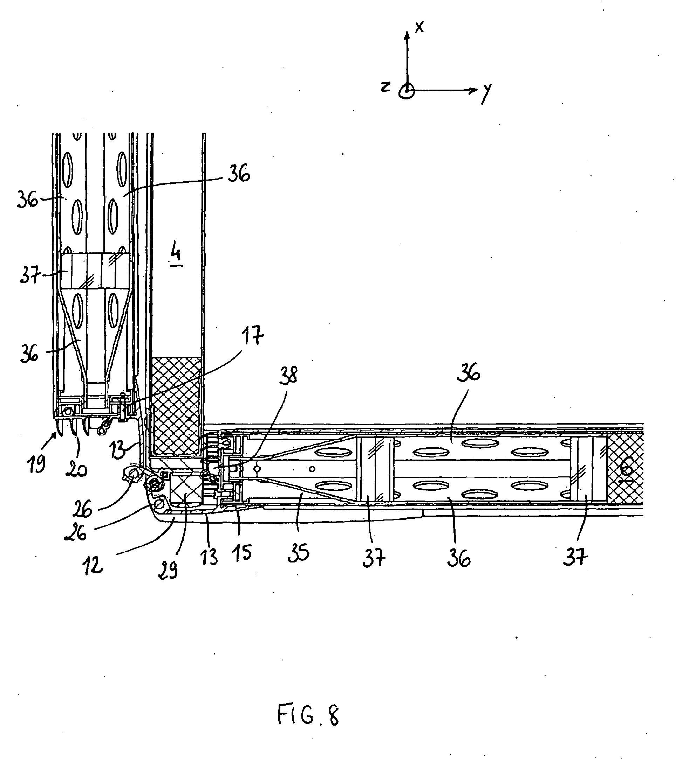

Dans l'exemple illustré, les tiges de liaison 26 sont des tiges télescopiques qui sont embarquées dans chacune des charnières comme cela apparaît en particulier à la Figure 8. D'autres moyens de liaison peuvent être envisagés ; il peut, par exemple, être envisagé de doter la caisse 1 de tiges qui s'étendent sur toute la hauteur de la paroi latérale 4.

Le verrouillage de chacune des portes 6 se fait grâce à une tringle manoeuvrable par une poignée 30 encastrée dans la surface de la porte 6 et qui vient s'engager ou se dégager d'une gâche 27 métallique rapportée sur le chant du plancher 3 et sur le chant du plafond 5.

On peut noter que la caisse 1 peut présenter des moyens d'absorption de chocs supplémentaires comme par exemple des butoirs 32 positionnés à chaque extrémité du plancher 3 et un bourrelet 33 qui court le long du chant du plancher 3. Des moyens d'absorption de chocs peuvent également être disposés sur le châssis qui supporte la caisse 1 selon des orientations verticale ou horizontale.

La figure 5 illustre une première particularité de la caisse selon l'invention qui est la création d'une cavité 28 qui est délimitée par l'aile 13 du profilé ouvrant 12 et par la face de chant du profilé dormant 8. Cette cavité 28 reçoit un butoir amortisseur 29; ce butoir amortisseur 29 qui peut être en caoutchouc et/ou peut intégrer des moyens d'absorption d'énergie de type ressort, présente une forme longiligne de façon à s'adapter à la forme de cavité 28 qui court sur toute la hauteur du chant de la paroi latérale 4.

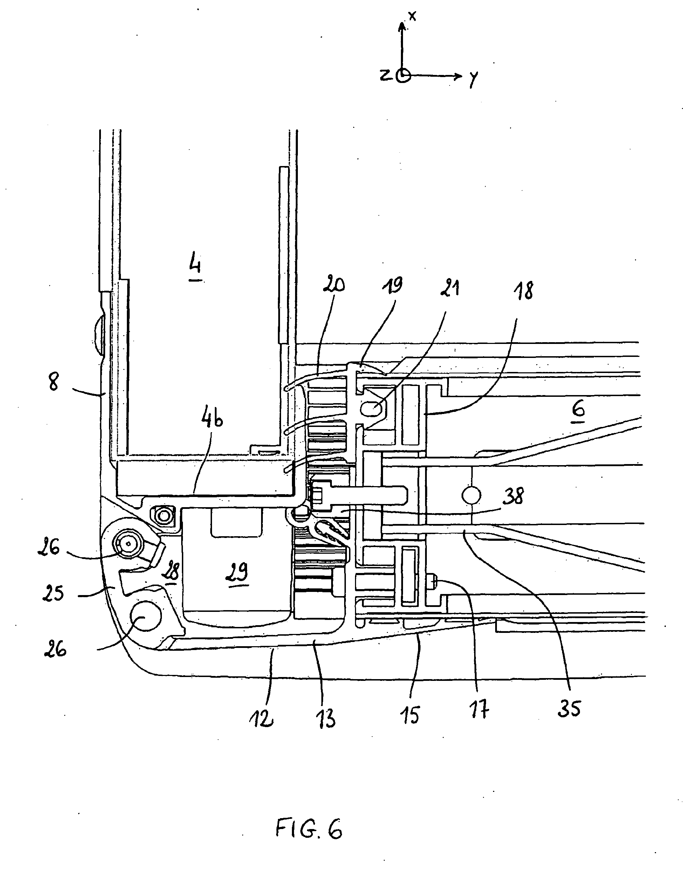

La Figure 6, qui montre la porte 6 dans sa position ouverte, fait alors apparaître deux avantages combinés de la caisse selon l'invention.

D'une part, lorsque la porte 6 est ouverte, on voit que le butoir amortisseur 29 qui est masqué par le profilé dormant 8 en position de fermeture devient apparent et fournit une protection des parois latérales 4 lors de l'accostage de la caisse 1 contre un quai; il s'agit là d'un premier bénéfice de l'invention.

D'autre part, en position ouverte, la porte 6 est elle-même déportée en direction de l'avant de la caisse ; il s'agit là du second bénéfice de l'invention puisque le fait que la porte 6 se trouve déportée vers l'avant d'une distance sensiblement égale à la dimension de l'aile 13 du profilé ouvrant 12, fait que la porte 6 est moins susceptible de heurter un quai, notamment lorsque le véhicule se présente de biais contre ce quai ; en tout état de cause si le véhicule, au niveau de l'articulation des portes 6 sur la caisse 1 devait heurter le quai, la zone de choc serait circonscrite au profilé dormant 8 et/ou à la charnière 25 et et/ou au profilé ouvrant 12 qui constituent des éléments standards qui peuvent être remplacés de manière simple.

On voit ainsi que l'invention fournit une caisse isotherme dont la partie arrière, et en particulier les moyens d'articulation des portes 6 sur la caisse, prend en compte la problématique de l'accostage contre un quai en proposant des protections supplémentaires disposées au niveau du chant des parois latérales 4 qui sont traditionnellement très exposées aux chocs ; de plus, les dispositions de l'invention permettent un déport des portes 6 hors de la zone de collision avec le quai.

L'invention présente également un second aspect qui est lié au fait que le mode de liaison des portes 6 par des charnières 29 double noeud peut affecter la rigidité globale de la caisse 1 et, notamment, sa rigidité en réponse à des sollicitations en torsion.

De façon à rigidifier la caisse 1, il peut être prévu de disposer des inserts 35 de rigidification notamment métalliques dans chacune des portes 6, au niveau des angles de celle-ci qui se trouvent à l'intersection du plancher 3 et des parois latérales 4.

Dans une forme de réalisation préférée de la caisse selon l'invention, il est prévu d'équiper d'inserts 35 de rigidification les deux angles latéraux de chacune des portes 6. La fonction des inserts 35 de rigidification est d'assurer un renfort de la caisse dans ses zones critiques, à savoir dans ses zones de liaison entre ses parois. Dans cette configuration de l'invention dans laquelle quatre inserts de rigidification 35 viennent respectivement s'emboîter dans les quatre angles de l'ouverture arrière, la rigidité de la caisse est notablement améliorée.

Comme on peut le voir sur la Fig. 8 qui représente la porte à la fois en position ouverte et en position fermée, l'insert de rigidification 35 peut comprendre deux plaques métalliques 36 en forme de L qui viennent s'inscrire au niveau des angles latéraux de chacune des portes; ces deux plaques métalliques 36 qui, dans l'exemple représenté sont ajourées, sont chacune collée sur les faces internes des deux parois formant les panneaux de portes arrières 6. Des entretoises 37 maintiennent à distance constante les plaques 36. On peut voir sur la Fig. 6 que l'insert de rigidification 35 vient en appui contre une cale intermédiaire 38 présente classiquement dans les portes 6.

La présence des inserts 35 de rigidification permet, sans dégrader les performances isothermes des portes 6, d'assurer une reprise des efforts de torsion qui s'appliquent sur la caisse. Ces efforts sont particulièrement importants lors du transport de charges suspendues sur les parois latérales 4 ; typiquement, il s'agit du transport de carcasses d'animaux pour lequel le recours à une caisse isotherme est indispensable.

L'invention fournit ainsi une caisse isotherme qui prend en compte la problématique de l'accostage contre un quai en proposant de protéger les chants des parois latérales 4 qui sont particulièrement exposées au cours de l'accostage et en proposant de déporter vers l'avant les portes 6 dans leur configuration ouverte de façon à les extraire de la zone de collision avec le quai.

En second lieu, l'invention propose de rigidifier la caisse par l'adjonction d'inserts 35 de rigidification au niveau des coins des portes 6 qui s'emboîtent au niveau de chaque coin de l'ouverture pour que les portes 6, lorsqu'elles sont fermées, assurent une véritable reprise des efforts, notamment des efforts de torsion qui sollicitent la caisse.

On peut noter que la caisse selon l'invention présente une partie arrière qui est dépourvue des aspérités que l'on trouve sur les caisses de l'art antérieur ; ces aspérités sont notamment dues à la présence de charnières d'articulation des portes 6. L'aspect lisse de la partie arrière est en particulier obtenu grâce au profilé ouvrant 12 qui masque les butoirs amortisseurs et dans lequel se fondent les charnières doubles noeuds.

Non seulement cela s'avère bénéfique sur un plan esthétique, mais cela facilite considérablement le nettoyage de la caisse.

Bien entendu, l'invention n'est pas limitée à la forme de réalisation décrite ci-dessus mais elle en embrasse au contraire toutes les formes de réalisation dans la portée des revendications. Le ou les inserts 35 de rigidification peuvent être intégrés dans l'épaisseur de la porte ou peuvent être rapportés à l'extérieur de la porte sur sa face extérieure ou sur sa face intérieure.

## Revendications

1. Caisse isotherme parallélépipédique pouvant être placée sur un châssis d'un véhicule motorisé ou non motorisé, constituée de panneaux isolants formant une paroi frontale, un plancher (3), un plafond (5), et deux parois latérales (4) encadrant une ouverture arrière fermée par au moins une porte (6), la caisse comprend des moyens de liaison de chacune des portes (6) sur respectivement le chant de chaque paroi latérale (4) permettant de faire pivoter chaque porte (6) depuis (i) une position de fermeture à (ii) une position d'ouverture dans laquelle chaque porte (6) est rabattue contre la face extérieure des parois latérales (4) et est déportée longitudinalement en direction de la paroi frontale de la caisse, c**aractérisée en ce que** dans la position de fermeture les moyens de liaison délimitent une cavité (28) qui s'étend le long du chant de chaque paroi latérale (4) dans laquelle est disposé un organe d'absorption de choc (29).

2. Caisse isotherme selon la revendication 1, **caractérisée en ce que** chacun des moyens de liaison d'une porte (6) sur la caisse comprend :
un profilé dormant (8) fixé sur le chant d'une des parois latérales (4), doté d'au moins un alésage situé sensiblement au niveau de l'intersection de la face extérieure et du chant de ladite paroi latérale 4, le profilé dormant (8) présentant un moins une découpe dans laquelle débouche l'alésage,
un profilé ouvrant (12) comprenant une aile dont une extrémité transversale est fixée sur le chant d'une porte (6) et dont la seconde extrémité transversale présente un ourlet (14) dans lequel est ménagé un alésage, le profilé ouvrant (12) présentant au moins un découpe dans laquelle débouche l'alésage,
au moins une charnière (25) double noeud à deux alésages parallèles, insérée dans le découpe du profilé dormant (8) et dans la découpe du profilé ouvrant (12), accueillant des tiges de liaison parallèles respectivement engagées dans l'alésage du profilé dormant (8) et dans l'alésage du profilé ouvrant (12),
les moyens de liaison (i) créant, en position fermée des portes (6), une cavité (28) verticale recevant un organe d'absorption de choc (29) délimitée par le chant (4a) de la paroi latérale (4), au moins une partie du chant de la porte (6) et l'aile (13) du profilé ouvrant (12) et (ii) déportant, en position ouverte de la caisse, la porte (6) en direction de la paroi frontale d'une distance sensiblement égale à la dimension transversale de l'aile.

3. Caisse isotherme selon la revendication 1 ou la revendication 2, **caractérisée en ce que**, en position fermée, chaque porte (6) s'engage au moins partiellement dans la caisse et est équipée de moyens de rigidification s'opposant à la déformation à la torsion de la caisse et/ou mise en parallélogramme de cette dernière par rapport à son axe longitudinal.

4. Caisse isotherme selon la revendication 3, **caractérisée en ce que** chaque porte (6), au niveau d'au moins un de ses angles présentent un insert (35) de rigidification.

5. Caisse isotherme selon la revendication 4, **caractérisée en ce que** chaque porte (6) présente un insert (35) de rigidification positionné dans l'angle de celle-ci contigu à l'angle de l'ouverture arrière faisant l'intersection entre le plancher (5) et l'une des parois latérales (4).

6. Caisse isotherme selon la revendication 4 ou la revendication 5, **caractérisée en ce que** chaque porte possède deux inserts (35) de rigidification positionnés dans ses deux angles latéraux.

7. Caisse isotherme selon la revendication 4, **caractérisée en ce que** chaque porte (6) présente un cadre (18) de renfort ceinturant un panneau isolant, sur lequel vient s'appuyer l'insert (35) de rigidification.

8. Caisse isotherme selon l'une des revendications 5 à 7, **caractérisée en ce que** l'insert de rigidification (35) comprend deux plaques (36) respectivement collées sur les faces internes des parois internes formant une porte arrière (6).

9. Caisse isotherme selon l'une des revendications 1 à 8, **caractérisée en ce que** chacune des portes (6) est reliée à la caisse par quatre charnières (25) à double noeud.

10. Caisse isotherme selon l'une des revendications 1 à 9, **caractérisée en ce que** chaque porte (6) embarque un joint périphérique (19) à plusieurs lèvres (20) qui viennent s'écraser contre les parois intérieures de la caisse lorsque ladite porte (6) est en position fermée.

11. Caisse isotherme selon l'une des revendications 1 à 10, **caractérisée en ce que** le profilé ouvrant (12) présente une nervure (23) sur laquelle est chaussé un joint (24) qui vient en appui contre l'arête située à l'intersection de la face intérieure et du chant d'une paroi latérale (4).

12. Caisse isotherme selon l'une des revendications 1 à 11, **caractérisée en ce que** un bourrelet (33) amortisseur est disposé sur le chant du plancher (3).

## Claims

1. A parallelepiped isotherm container able to be placed on a chassis of a motorized or non-motorized vehicle, made up of insulating panels forming a frontal wall, a floor (3), a ceiling (5), and two side walls (4) surrounding a rear opening closed by at least one door (6), the container comprising means for connecting each of the doors (6) on the respective edge of each side wall (4) making it possible to pivot each door (6) from (i) a closing position to (ii) an opening position in which each door (6) is folded against the outer face of the side walls (4) and is longitudinally offset toward the frontal wall of the container, **characterized in that** in the closing position, the connecting means define a cavity (28) which extends along the edge of each side wall (4) wherein a shock absorption member (29) is arranged.

2. The isotherm container according to claim 1, **characterized in that** each of the means for connecting a door (6) on the container comprises:
a sleeper section (8) fixed on the edge of one of the side walls (4), provided with at least one bore situated essentially at the intersection of the outer face and
the edge of said side wall (4), the sleeper section (8) having at least one cutout into which the bore opens,
a casement section (12) comprising a fin whereof one transverse end is fixed on the edge of a door (6) and the second transverse end of which has a lap-joint (14) in which a bore is arranged, the casement section (12) having at least one cutout into which the bore opens,
at least one double-acting hinge (25) with two parallel bores, inserted into the cutout of the sleeper section (8) and into the cutout of the casement section (12), receiving parallel connecting rods engaged respectively in the bore of the sleeper section (8) and in the bore of the casement section (12),
the connecting means (i) creating, in the closed position of the doors (6), a vertical cavity (28) receiving a shock absorption member (29) defined by the edge (4a) of the side wall (4), at least one portion of the edge of the door (6) and the fin (13) of the casement section (12) and (ii) offsetting, in the opening position of the container, the door (6) toward the frontal wall by a distance essentially equal to the transverse dimension of the fin.

3. The isotherm container according to claim 1 or claim 2, **characterized in that**, in the closed position, each door (6) engages at least partially in the container and is equipped with rigidification means opposing the torsional deformation of the container and/or parallelogramming of the latter part in relation to its longitudinal axis.

4. The isotherm container according to claim 3, **characterized in that** each door (6), at the level of at least one of its corners, has a rigidification insert (35).

5. The isotherm container according to claim 4, **characterized in that** each door (6) has a rigidification insert (35) positioned in the corner thereof contiguous to the corner of the rear opening serving as the intersection between the floor (5) and one of the side walls (4).

6. The isotherm container according to claim 4 or claim 5, **characterized in that** each door has two rigidification inserts (35) positioned in its two side corners.

7. The isotherm container according to claim 4, **characterized in that** each door (6) has a reinforcing frame (18) surrounding an insulating panel, on which the rigidification insert (35) bears.

8. The isotherm container according to one of claims 5 to 7, **characterized in that** the rigidification insert (35) comprises two plates (36) respectively stuck on the inner faces of the inner walls forming a rear door (6).

9. The isotherm container according to one of claims 1 to 8, **characterized in that** each of the doors (6) is connected to the container by four double-acting hinges (25).

10. The isotherm container according to one of claims 1 to 9, **characterized in that** each door (6) comprises a peripheral seal (19) with several lips (20) which are pressed against the inner walls of the container when said door (6) is in the closed position.

11. The isotherm container according to one of claims 1 to 10, **characterized in that** the casement section (12) has a veining (23) on which a seal (24) is fitted which bears against the edge situated at the intersection of the inner face and the edge of a side wall (4).

12. The isotherm container according to one of claims 1 to 11, **characterized in that** a shock absorber bead (33) is arranged on the edge of the floor (3).

## Patentansprüche

1. Parallelepipedischer Isothermbehälter, der auf dem Fahrgestell eines motorisierten oder nicht motorisierten Fahrzeugs platzierbar ist, der aus Isolierpaneelen besteht, die eine Stirnwand, einen Boden (3), eine Decke (3), einen Boden (5) und zwei Seitenwände (4) bilden, die eine hintere Öffnung umrahmen, die von mindestens einer Tür (6) verschlossen wird, wobei der Behälter Mittel zur Verbindung jeder Tür (6) auf der jeweiligen Kante jeder Seitenwand (4) umfasst, die es erlauben, jede Tür (6) von (i) einer geschlossenen Stellung in (ii) eine geöffnete Stellung zu schwenken, in der jede Tür (6) gegen die Außenseite der Seitenwände (4) geklappt und längs in Richtung Stirnwand des Behälters versetzt ist, **dadurch gekennzeichnet, dass** die Verbindungsmittel in der geschlossenen Stellung einen sich entlang der Kante jeder Seitenwand (4) erstreckenden Hohlraum (28) begrenzen, in dem ein Organ zur Stoßaufnahme (29) angeordnet ist.

2. Isothermbehälter nach Anspruch 1, **dadurch gekennzeichnet, dass** jedes der Verbindungsmittel einer Tür (6) auf dem Behälter umfasst:
ein Rahmenprofil (8), das auf der Kante einer der Seitenwände (4) befestigt ist, versehen mit mindestens einer Bohrung etwa auf Ebene des Schnittpunkts der Außenseite und der Kante der Seitenwand (4), wobei das Rahmenprofil (8) mindestens einen Ausschnitt aufweist, in den die Bohrung mündet,
ein Klappprofil (12) mit einem Flügel, von dem ein transversales Ende auf der Kante einer Tür (6) befestigt ist und dessen zweites transversales Ende einen Saum (14) aufweist, in den eine Bohrung eingearbeitet ist, wobei das Klappprofil (12) mindestens einen Ausschnitt aufweist, in den die Bohrung mündet,
mindestens ein Doppelbuchsen-Scharnier (25) mit zwei parallelen Bohrungen, die in den Ausschnitt des Rahmenprofils (8) eingebracht sind und in den Ausschnitt des Klappprofils (12), parallele Verbindungsstifte aufnehmend, die jeweils in die Bohrung des Rahmenprofils (8) und in die Bohrung des Klappprofils (12) eingebracht sind,
wobei die Verbindungsmittel (i) in geschlossener Stellung der Türen einen vertikalen, ein Organ zur Stoßaufnahme (29) aufnehmenden Hohlraum (28) bilden, der von der Kante (4a) der Seitenwand (4) begrenzt wird, mindestens einem Abschnitt des Saums der Tür (6) und dem Flügel (13) des Klappprofils (12) und (ii), wobei die Tür (6) in geöffneter Stellung des Behälters in Richtung Stirnwand in einem Abstand versetzt wird, der etwa der transversalen Abmessung des Flügels entspricht.

3. Isothermbehälter nach Anspruch 1 oder Anspruch 2, **dadurch gekennzeichnet, dass** jede Tür (6) in geschlossener Stellung mindestens teilweise in den Behälter eingreift und mit Versteifungsmitteln ausgestattet ist, die der Verwindungsdeformation des Behälters und/oder Parallelogrammverstellung desselben im Verhältnis zu seiner Längsachse entgegenwirken.

4. Isothermbehälter nach Anspruch 3, **dadurch gekennzeichnet, dass** jede Tür (6) auf Ebene mindestens einer ihrer Ecken eine Versteifungseinlage (35) aufweist

5. Isothermbehälter nach Anspruch 4, **dadurch gekennzeichnet, dass** jede Tür (6) eine Versteifungseinlage (35) aufweist, die in der Ecke derselben positioniert ist, die an die zwischen dem Boden (5) und einer der Seitenwände (4) den Schnittpunkt bildende Ecke der hinteren Öffnung angrenzt.

6. Isothermbehälter nach Anspruch 4 oder Anspruch 5, **dadurch gekennzeichnet, dass** jede Tür zwei Versteifungseinlagen (35) besitzt, die in ihren zwei seitlichen Ecken positioniert sind.

7. Isothermbehälter nach Anspruch 4, **dadurch gekennzeichnet, dass** jede Tür (6) einen eine Isolierplatte umgebenden Verstärkungsrahmen (18) aufweist, auf dem sich die Versteifungseinlage (35) abstützt.

8. Isothermbehälter nach einem der Ansprüche 5 bis 7, **dadurch gekennzeichnet, dass** die Versteifungseinlage (35) zwei Platten (36) umfasst, die jeweils auf die Innenseiten der eine hintere Tür (6) bildenden Innenwände geklebt sind.

9. Isothermbehälter nach einem der Ansprüche 1 bis 8, **dadurch gekennzeichnet, dass** jede Tür (6) mit dem Behälter durch vier Doppelbuchsen-Scharniere (25) verbunden ist.

10. Isothernibehälter nach einem der Ansprüche 1 bis 9, **dadurch gekennzeichnet, dass** jede Tür (6) eine periphere Dichtung (19) mit mehreren Lippen (20) umfasst, die gegen die Innenwände des Behälters drücken, wenn die Tür (6) in geschlossener Stellung ist.

11. Isothermbehälter nach einem der Ansprüche 1 bis 10, **dadurch gekennzeichnet, dass** das Klappprofil (12) eine Rippe (23) aufweist, auf der eine Dichtung (24) angebracht ist, die sich auf dem am Schnittpunkt der Innenseite und der Kante einer Seitenwand (4) befindlichen Grat (4) abstützt.

12. Isothermbehälter nach einem der Ansprüche 1 bis 11, **dadurch gekennzeichnet, dass** auf der Kante des Bodens (3) eine dämpfende Wulst (33) angeordnet ist.
